# EUROPEAN PATENT SPECIFICATION

(11) **EP 2 512 176 B1**
(45) Date of publication and mention of the grant of the patent: **27.06.2018**
(21) Application number: 10835457.2
(22) Date of filing: 30.11.2010
(51) Int. Cl.: H04W 28/02, H04W 24/08

(54) **CONGESTION CONTROL METHOD AND OPERATIONS MAINTENANCE CENTER**
ÜBERLASTUNGSSTEUERUNGSVERFAHREN UND BETRIEBSWARTUNGSZENTRUM
PROCÉDÉ DE RÉGULATION DE L'ENCOMBREMENT ET CENTRE D'EXPLOITATION ET DE MAINTENANCE

(30) Priority: 09.12.2009 CN 200910253958
(43) Date of publication of application: 17.10.2012
(73) Proprietor: Huawei Technologies Co., Ltd., Longgang District Shenzhen, Guangdong 518129 (CN)
(72) Inventor: LUO, Peng, Shenzhen Guangdong 518129 (CN)
(74) Representative: Körber, Martin Hans
(86) International application number: PCT/CN2010/079284
(87) International publication number: WO 2011/069422

(56) References cited:
- WO-A1-2009/090582
- WO-A2-2008/085372
- WO-A2-2009/058085
- CN-A- 1 874 319
- CN-A- 101 179 355
- CN-A- 101 431 420
- CN-A- 101 711 041
- GB-A- 2 382 266
- GB-A- 2 399 988
- US-A1- 2006 126 509
- US-A1- 2008 056 125

## Description

### FIELD OF THE INVENTION

The present invention relates to the field of communications technologies, and in particular, to a congestion control method, an operations maintenance center device and a Policy Charging and Control Rule Function Entity.

### BACKGROUND OF THE INVENTION

With the development of radio data services, congestion always occurs in some hotpot cells in a network due to large traffic, resulting in that users in the congested cells cannot use data services normally.

Aiming at the foregoing problem, the prior art mainly provides two solutions for performing congestion control. One solution is that: a probe (Probe) point is added after a base station, and the Probe monitors a congestion status of the base station, analyzes user information and service data under the base station, and performs the congestion control. Though the Probe can monitor the congestion status of the base station, it is hard to detect the user information under the base station, and the Probe cannot perform flexible policy control. Moreover, a charging point of the network locates in a core network, and therefore, if the congestion control is performed at the Probe, discarded packets may still be charged in the core network, resulting in charging errors. In addition, if every base station is configured with a Probe, the cost is high.

In a conventional general packet radio service (General Packet Radio Service; referred to as GPRS herein below)/universal mobile telecommunications system (Universal Mobile Telecommunications System; referred to as UMTS herein below) network, when cell resource congestion occurs, a radio network controller (Radio Network Controller; referred to as RNC herein below) performs determination and processing. In the other solution of performing the congestion control, an RNC may upload service area (Service Area; referred to as SA herein below) information to a core network, so that the RNC can inform of the core network when an SA of a user changes, where generally one cell is configured with one SA. A core network service GPRS support node (Service GPRS Support Node; referred to as SGSN herein below)/gateway GPRS support node (Gateway GPRS Support Node; referred to as GGSN herein below) may determine which cell the user locates in according to the SA. By accumulating the number of users and traffic of each cell, the cell congestion may be determined roughly, so as to initiate the congestion control. However, if the solution is adopted, the conventional network RNC/SGSN/GGSN requires upgrading; moreover, different base stations and cells have different capacities, so the core network cannot accurately determine, according to the user information, whether the congestion occurs in the base station. If the user hands over frequently among cells, resulting in that the RNC sends a large number of location reporting messages to the core network, the performance of the RNC/SGSN/GGSN may be greatly influenced, and therefore, in order to reduce signaling impact on the core network resulted from the RNC, the location (SA) report message of the RNC is generally disabled.

The conventional congestion control method requires adding extra devices, has a high cost, or has great impact on the network performance.

Document GB 2 399 988 A discloses a mechanism for reducing network congestion in a communication system. A call from a mobile station to a destination node is transmitted via respectively a base switching site defined by both a base station controller and a base transceiver station, an ingress telephone exchange of a core network and a destination exchange of the core network. An operations and management centre is thereby informed, or recognises, that a congested network condition exists at a particular network node, and sends a message to all communication exchange functions to initiate call gapping at their particular node, said call gaping involving automatically rejecting a percentage of call attempts. Alternatively, when the destination node is identified as experiencing an excessive amount of call attempts, call gapping is invoked for that particular destination node by the operations and management centre coupled to the core network. The mobile stations are thereby configured to perform a self-regulating call gapping process

Document WO 2009/090582 A1 relates to IP based cellular wireless networks. It is proposed to monitor, in the e-NodeB network access node, the traffic in one or more LTE cells. Whenever VoIP traffic in any cell becomes congested and there is need to get more VoIP users to share the cell packet resources, a request is sent to downgrade the bit rate of all VoIP bearer's belonging to the congested cell.

Document WO 2008/085372 A2 describes a border gateway which is configured to send an overload message and a controller that is acting as a Diameter protocol server which is configured to receive the overload message and block a number of calls to the border gateway. In an embodiment the controller is represented by the Policy Charging and Rule Function, PCRF. In an embodiment the controller is in communication with a plurality of border gateways and the border gateways communicate with User Equipment.

### SUMMARY OF THE INVENTION

The invention is defined by the features of the independent claims.

Embodiments of the present invention provide a congestion control method, an operations maintenance center and a policy charging and control rule function entity, so as to implement congestion control for the base station with a low cost and small impact on the network performance through a core network.

An embodiment of the present invention provides a congestion control method, including:
receiving, by an operations maintenance center, a congestion status report of a base station; and
sending, by the operations maintenance center, the congestion status report to a policy charging and control rule function entity through a reporting interface, and the policy charging and control rule function entity performs congestion control according to the congestion status report,
wherein, the performing, by the policy charging and control rule function entity, the congestion control according to the congestion status report comprises:
   when congestion occurs in a cell, according to a congestion status in the congestion status report, performing, by the policy charging and control rule function entity, limiting on a user in the cell where congestion occurs,
   wherein the performing limiting on the user in the cell where congestion occurs includes performing traffic limiting or service limiting on the user in the cell where congestion occurs.
An embodiment of the present invention further provides an operations maintenance center, including:
a receiving module, adapted to receive a congestion status report of a base station; and
a sending module, adapted to send the congestion status report received by the receiving module to a policy charging and control rule function entity through a reporting interface, and the policy charging and control rule function entity performs congestion control according to the congestion status report,
wherein, the performing, by the policy charging and control rule function entity, the congestion control according to the congestion status report comprises:
   when congestion occurs in a cell, according to a congestion status in the congestion status report, performing, by the policy charging and control rule function entity, limiting on a user in the cell where congestion occurs,
   wherein the performing limiting on the user in the cell where congestion occurs includes performing traffic limiting or service limiting on the user in the cell where congestion occurs.

An embodiment of the present invention further provides a policy charging and control rule function entity, including:
a report receiving module, adapted to receive through a reporting interface a congestion status report of a base station sent by an operations maintenance center; and
a service limiting module, adapted to, according to a congestion status in the congestion status report received by the report receiving module, when congestion occurs in a cell, perform limiting on a user in the cell where congestion occurs,
wherein the performing limiting on the user in the cell where congestion occurs includes performing traffic limiting or service limiting on the user in the cell where congestion occurs. According to the embodiments of the present invention, the operations maintenance center receives the congestion status report of the base station, and sends the congestion status report to the policy charging and control rule function entity, and the policy charging and control rule function entity can perform congestion control according to the congestion status report. With the embodiments of the present invention, congestion control is implemented in real time, and extra devices are not needed, thereby saving costs. Further, a core network does not need to initiate a function of reporting a user location, and therefore, the impact on network performance is reduced.

### BRIEF DESCRIPTION OF THE DRAWINGS

To make the technical solutions of the embodiments of the present invention or the prior art clearer, the accompanying drawings used in the description of the embodiments or the prior art are briefly described hereunder. Evidently, the accompanying drawings illustrate some exemplary embodiments of the present invention and persons of ordinary skill in the art may obtain other drawings based on these drawings without creative efforts.
FIG. 1 is a flow chart of an embodiment of a congestion control method of the present invention;
FIG. 2 is a flow chart of another embodiment of a congestion control method of the present invention;
FIG. 3 is a flow chart of still another embodiment of a congestion control method of the present invention;
FIG. 4 is a schematic diagram of a congestion control effect in an embodiment of the present invention;
FIG. 5 is a schematic diagram of congestion control in an embodiment of the present invention, when a user in a cell changes;
FIG. 6 is a schematic structural diagram of an embodiment of an operations maintenance center device of the present invention;
FIG. 7 is a schematic structural diagram of an embodiment of a policy charging and control rule function entity of the present invention;
FIG. 8 is a schematic structural diagram of another embodiment of a policy charging and control rule function entity of the present invention;
FIG. 9 is a schematic structural diagram of still another embodiment of a policy charging and control rule function entity of the present invention;
FIG. 10 is a schematic structural diagram of an example of a base station of the present invention;
FIG. 11 is a schematic structural diagram of an embodiment of a congestion control system of the present invention; and
FIG. 12 is a schematic structural diagram of another embodiment of a congestion control system of the present invention.

### DETAILED DESCRIPTION OF THE EMBODIMENTS

To make the objectives, technical solutions, and advantages of the embodiments of the present invention clearer, the technical solutions provided by the embodiments of the present invention are herein below described clearly and completely with reference to the accompanying drawings. Evidently, the described embodiments are only some exemplary embodiments of the present invention, the protection scope of the present invention is defined by the appended claims. Any embodiment not defined in the claims is thus considered as not part of the scope for which protection is sought. In the conventional mobile network, generally an operations maintenance center (Operations Maintenance Center; referred to as OMC herein below) is used to manage and maintain the radio network including a radio access network. The OMC is a network management device, which is independent of a main device of the communication system, and generally does not participate in processing services.

An embodiment of the present invention provides a congestion control method, in which a congestion status report of a base station is received through the OMC.

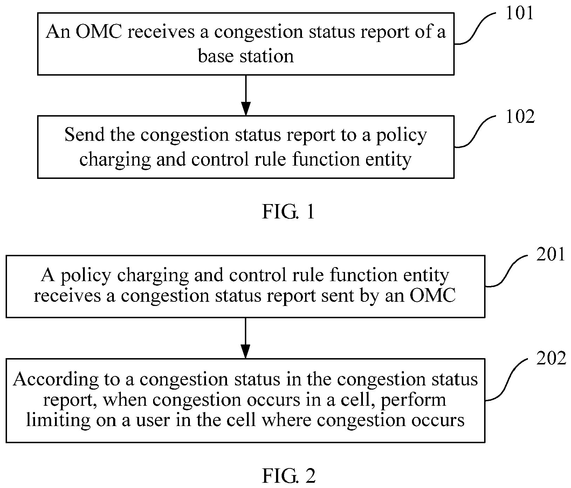

FIG. 1 is a flow chart of an embodiment of a congestion control method of the present invention, and referring to FIG. 1, the embodiment may include:
Step 101: The OMC receives a congestion status report of a base station.

In this embodiment, the congestion status report includes a cell identity, a congestion status of a cell corresponding to the cell identity, and a user identity in the cell. The congestion status report may include cell identities of multiple cells, and each cell may have one or more user identities. The cell identity and user identity in the congestion status report may be carried in the congestion status report in the form of a list or an array; definitely, the embodiment of the present invention is not
limited thereto, and the manner of carrying the cell identity and user identity in the congestion status report is not limited in the embodiment of the present invention.

In this embodiment, the cell identity may be a server area identity (Server Area Identity) or cell global identity (Cell Global Identity); the user identity may be an international mobile subscriber identity (International Mobile Subscriber Identity; referred to as IMSI herein below); definitely, the embodiment of the present invention is not limited thereto, the cell identity and user identity may also be other identities, as long as cell identities can identify different cells, and user identities can identify different users.

The congestion status may be congestion or no congestion, represented by "0" or "1", for example, "0" represents no congestion, and "1" represents congestion; alternatively, the congestion status may be congestion or no congestion, a congestion degree is distinguished by more than one congestion level, and a congestion level may be represented by a numeral, for example, "0" represents no congestion, "1" represents level 1 congestion, "2" represents level 2 congestion, and a larger numeral which represents a larger congestion level shows that the congestion status of a cell is severer; definitely, the embodiment of the present invention is not limited thereto, congestion or no congestion may also be represented in other manners, as long as whether congestion occurs can be determined; and congestion levels may also be distinguished in other manners, for example, with English letters or other characters, as long as the congestion levels can be distinguished. Specifically, the OMC may receive the congestion status report that is directly reported by the base station; or, the OMC may receive the congestion status report that is reported by the base station through a base station controller, for example, an RNC. In this embodiment, the base station may report the congestion status report periodically, for example, 10 seconds as a period, the congestion status report is reported every 10 seconds; the base station may also report the congestion status report when a congestion status of a cell in the base station changes, for example, when congestion occurs in a cell, it reports the congestion status report; or, when the congestion status of a cell where congestion occurs is released, it reports the congestion status report.

Step 102: Send the congestion status report to a policy charging and control rule function entity, so that the policy charging and control rule function entity performs congestion control according to the congestion status report.

In this embodiment, a reporting interface is added between the OMC and the policy charging and control rule function entity, the OMC sends the congestion status report to the policy charging and control rule function entity through the reporting interface, so that the policy charging and control rule function entity may perform congestion control according to the congestion status report.

In the foregoing embodiment, the policy charging and control rule function entity performs congestion control according to the congestion status report sent by the OMC, and extra devices are not needed, thereby saving costs. Further, a core network does not need to initiate a function of reporting a user location, and therefore, the impact on network performance is reduced.

FIG. 2 is a flow chart of another embodiment of a congestion control method of the present invention, and referring to FIG. 2, the embodiment may include:
Step 201: A policy charging and control rule function entity receives a congestion status report sent by an OMC. The congestion status report includes a cell identity, a congestion status of a cell corresponding to the cell identity, and a user identity in the cell. The congestion status report may include cell identities of multiple cells, and each cell may have one or more user identities. The cell identity and user identity in the congestion status report may be carried in the congestion status report in the form of a list or an array; definitely, the embodiment of the present invention is not limited thereto, and the manner of carrying the cell identity and user identity in the congestion status report is not limited in the embodiment of the present invention.

In this embodiment, a reporting interface is added between the OMC and the policy charging and control rule function entity, and the policy charging and control rule function entity receives, through the reporting interface, the congestion status report reported by the OMC.

In this embodiment, the cell identity may be a Server Area Identity or Cell Global Identity; the user identity may be an IMSI; definitely, the embodiment of the present invention is not limited thereto, the cell identity and user identity may also be other identities, as long as cell identities can identify different cells, and user identities can identify different users.

The congestion status may be congestion or no congestion, represented by "0" or "1", for example, "0" represents no congestion, and "1" represents congestion; alternatively, the congestion status may be congestion or no congestion, a congestion degree is distinguished by more than one congestion level, and a congestion level may be represented by a numeral, for example, "0" represents no congestion, "1" represents level 1 congestion, "2" represents level 2 congestion, and a larger numeral which represents a larger congestion level shows that the congestion status of a cell is severer; definitely, the embodiment of the present invention is not limited thereto, congestion or no congestion may also be represented in other manners, as long as whether congestion occurs can be determined; and congestion levels may also be distinguished in other manners, for example, with English letters or other characters, as long as the congestion levels can be distinguished.

Step 202: According to a congestion status in the congestion status report, when congestion occurs in a cell, perform limiting on a user in the cell where congestion occurs.

Specifically, the policy charging and control rule function entity may, according to the congestion status in the congestion status report, perform limiting on the user in the cell where congestion occurs. The performing limiting on the user in the cell where congestion occurs includes performing traffic limiting or service limiting on the user in the cell where congestion occurs. Specifically, the policy charging and control rule function entity may deliver a congestion control policy to a core network device, so that the core network device may, according to the congestion control policy, reduce quality of service of the user in the cell where congestion occurs.

In this embodiment, when the congestion status in the congestion status report includes a congestion level, the policy charging and control rule function entity may deliver a different congestion control policy according to the congestion level of the cell where congestion occurs. If the congestion level of the cell is high, it indicates that the congestion occurring in the cell is severe, and then the policy charging and control rule function entity may deliver a congestion control policy with a high control degree, so that quality of service of the cell having a high congestion level is greatly reduced as compared with quality of service before congestion occurs. If the congestion level of the cell is low, it indicates that the congestion occurring in the cell is light, and then the policy charging and control rule function entity may deliver a congestion control policy with a low control degree, so that quality of service of the cell having a low congestion level is slightly reduced as compared with quality of service before congestion occurs.

After performing limiting on the user in the cell where congestion occurs, the policy charging and control rule function entity may release the limiting on the user in the cell where congestion occurs, including releasing traffic limiting or service limiting on the user in the cell where congestion occurs.

Specifically, one manner of releasing the limiting on the user in the cell where congestion occurs is that: the policy charging and control rule function entity may deliver a congestion control release policy to the core network device, so that the core network device may, according to the congestion control release policy, adjust quality of service of the user in the cell where congestion occurs, that is, restore the quality of service of the user in the cell where congestion occurs to the quality of service before congestion occurs. In this embodiment, the policy charging and control rule function entity may deliver the congestion control release policy to the core network device at a fixed time or periodically. The fixed-time delivering includes that the policy charging and control rule function entity delivers the congestion control release policy to the core network device at a predetermined time or several predetermined times, or after a predetermined time length after delivering the congestion control policy; the periodical delivering includes that the policy charging and control rule function entity periodically delivers the congestion control release policy to the core network device according to a predetermined period; alternatively, the policy charging and control rule function entity may also, according to the congestion status in the congestion status report sent by the OMC, after the congestion status of the cell where congestion occurs is released, deliver the congestion control release policy to the core network device.

Another manner of releasing the limiting on the user in the cell where congestion occurs is that: the policy charging and control rule function entity may configure a validity period of the congestion control policy, and deliver the validity period to the core network device, so that after the validity period expires, the core network device restores the quality of service of the user in the cell where congestion occurs to the quality of service before congestion occurs. In this way the core network device can timely release the limiting on the user in the cell where congestion occurs, and can reduce the uncertainty brought by delivering of the policy, for example, the loss of the congestion control release policy results in that the user always cannot use some services. In this embodiment, the validity period of the congestion control policy may be delivered to the core network device at the same time when the policy charging and control rule function entity delivers the congestion control policy, and it is also possible that after the congestion control policy is delivered, the validity period of the congestion control policy is delivered to the core network device through a single message. The manner of delivering the validity period of the congestion control policy is not limited in the embodiment of the present invention.

In this embodiment, the foregoing manners of releasing the limiting on the user in the cell where congestion occurs may be used in a combined manner, for example, the policy charging and control rule function entity can deliver the configured validity period of the congestion control policy to the core network device, and can deliver the congestion control release policy to the core network device after receiving the congestion status report sent by the OMC and determining, according to the congestion status in the congestion status report, that the congestion status in the cell where congestion occurs is released. At this time, the core network device can configure execution priorities for the two manners, for example, can configure that the execution priority of the congestion control release policy is higher than the execution priority of the validity period of the congestion control policy, and therefore, when the validity period of the congestion control policy does not expire, if the core network device receives the congestion control release policy sent by the policy charging and control rule function entity, because the execution priority of the congestion control release policy is higher than the execution priority of the validity period of the congestion control policy, the core network device may execute the congestion control release policy in priority, and the core network device releases the limiting on the user in the cell where congestion occurs according to the congestion control release policy. The above is only one example of combining the manners of releasing the limiting on the user in the cell where congestion occurs, the embodiment of the present invention is not limited thereto, and other manners can also be used to combine the foregoing manners of releasing the limiting on the user in the cell where congestion occurs, which are not limited in the embodiment of the present invention.

In this embodiment, the policy charging and control rule function entity may deliver the congestion control release policy to the core network device at a fixed time or periodically, or deliver the validity period of the congestion control policy to the core network device, so that the policy charging and control rule function entity does not need to save location information of the user, does not need to monitor a user location in real time, and even if the user leaves the cell where congestion occurs, the limiting on the user can be released automatically. Moreover, by using the manner of releasing the congestion control at a fixed time, periodically or through configuring the validity period, when the fixed time, the period or the validity period does not expire, even if the policy charging and control rule function entity determines, according to the congestion status in the congestion status report sent by the OMC, that the congestion state of the cell where congestion occurs is released, the policy charging and control rule function entity will still not release the limiting on the user in the cell where congestion occurs, thereby effectively prolonging the frequency of a cycle of cell congestion→ service control→ congestion release→ service restoring→ congestion again.

In this embodiment, the core network device may be a GGSN.

With the foregoing embodiment, limiting on the user in the cell where congestion occurs is implemented in real time, the limiting on the user in the cell where congestion occurs can be released, and extra devices are not needed, thereby saving costs. Further, a core network does not need to initiate a function of reporting a user location, and therefore, the impact on network performance is reduced.

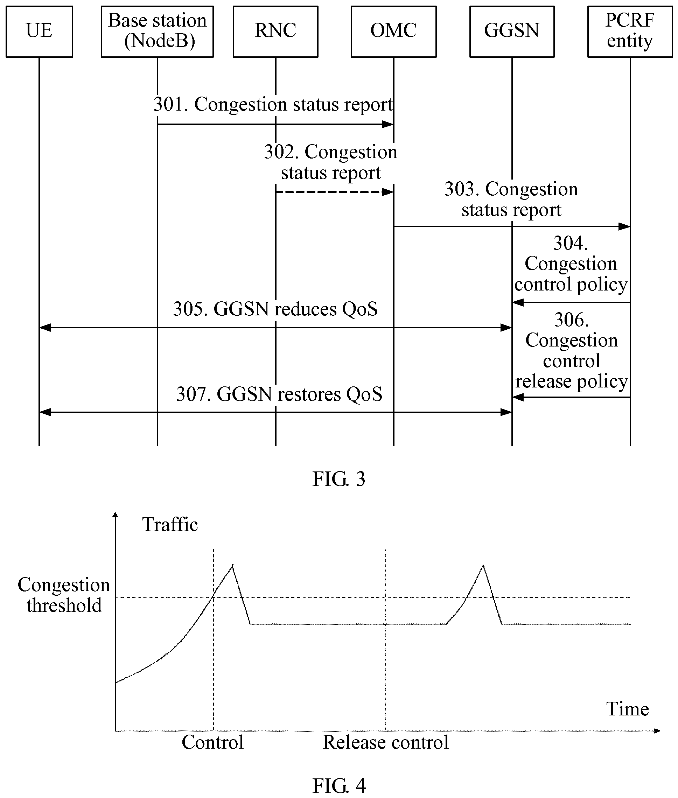

FIG. 3 is a flow chart of still another embodiment of a congestion control method of the present invention, and in this embodiment, a core network device being a GGSN is taken as an example. Referring to FIG. 3, the embodiment may include:
Step 301: The base station reports a congestion status report to an OMC, the congestion status report includes a cell identity, a congestion status of a cell corresponding to the cell identity, and a user identity in the cell. The congestion status report may include cell identities of multiple cells, and each cell may have one or more user identities. The cell identity and user identity in the congestion status report may be carried in the congestion status report in the form of a list or an array; definitely, the embodiment of the present invention is not limited thereto, and the manner of carrying the cell identity and user identity in the congestion status report is not limited in the embodiment of the present invention.

In this embodiment, the cell identity may be a Server Area Identity or Cell Global Identity; the user identity may be an IMSI; definitely, the embodiment of the present invention is not limited thereto, the cell identity and user identity may also be other identities, as long as cell identities can identify different cells, and user identities can identify different users.

The congestion status may be congestion or no congestion, represented by "0" or "1", for example, "0" represents no congestion, and "1" represents congestion; alternatively, the congestion status may be congestion or no congestion, a congestion degree is distinguished by more than one congestion level, and a congestion level may be represented by a numeral, for example, "0" represents no congestion, "1" represents level 1 congestion, "2" represents level 2 congestion, and a larger numeral which represents a larger congestion level shows that the congestion status of a cell is severer; definitely, the embodiment of the present invention is not limited thereto, congestion or no congestion may also be represented in other manners, as long as whether congestion occurs can be determined; and congestion levels may also be distinguished in other manners, for example, with English letters or other characters, as long as the congestion levels can be distinguished.

In this embodiment, the base station may report the congestion status report periodically, for example, 10 seconds as a period, the congestion status report is reported every 10 seconds; the base station may also report the congestion status report when a congestion status of the cell in the base station changes, for example, when congestion occurs in a cell, it reports the congestion status report; or, when the congestion status of the cell where congestion occurs is released, it reports the congestion status report. Definitely, the embodiment of the present invention is not limited thereto, according to an actual application scenario, the base station may change from no congestion to congestion, or may change from congestion to no congestion, and may also have more severe congestion or relieved congestion. According to the embodiment of the present invention, the base station can report the congestion status flexibly, thereby performing the corresponding congestion control processing.

Step 302: Optionally, in some networks, an RNC serves as a proxy of the base station to report the congestion status report to the OMC.

Step 303: The OMC sends the congestion status report to a policy charging and control rule function (Policy Charging and Control Rule Function; referred to as PCRF herein below) entity.

In this embodiment, a reporting interface is added between the OMC and the PCRF entity, and the OMC sends the congestion status report to the PCRF entity through the reporting interface.

Step 304: The PCRF entity delivers a congestion control policy to the GGSN according to a congestion status in the congestion status report when congestion occurs in a cell.

Specifically, the PCRF entity may adopt a Gx interface to deliver the congestion control policy to the GGSN, and a control object is a user in the cell where congestion occurs.

In this embodiment, when the congestion status in the congestion status report includes a congestion level, a policy charging and control rule function entity may deliver a different congestion control policy according to the congestion level of the cell where congestion occurs. If the congestion level of the cell is high, it indicates that the congestion occurring in the cell is severe, and then the PCRF entity may deliver a congestion control policy with a high control degree, for example, limiting the user in the cell where congestion occurs from using a certain service; and if the congestion level of the cell is low, it indicates that the congestion occurring in the cell is light, and then the PCRF entity may deliver a congestion control policy with a low control degree, for example, not performing service limiting on the user in the cell where congestion occurs, but only performing traffic limiting on the user in the cell where congestion occurs.

Step 305: The GGSN reduces quality of service (Quality of Service; referred to as QoS herein below).

Specifically, the GGSN reduces the QoS of the user in the cell where congestion occurs according to the congestion control policy delivered by the PCRF entity. When the PCRF entity delivers the congestion control policy having a high control degree, the GGSN may limit, according to the congestion control policy, the user in the cell where congestion occurs from using a certain service, for example, the GGSN starts to intercept a point to point (Point to Point; referred to as P2P herein below) service of the user in the cell where congestion occurs, so that the QoS of the cell having a high congestion level is greatly reduced as compared with the QoS before congestion occurs. When the PCRF entity delivers the congestion control policy having a low control degree, the GGSN may, according to the congestion control policy, not perform service limiting on the user in the cell where congestion occurs, but only perform traffic limiting on the user in the cell where congestion occurs, for example, the GGSN does not limit the user in the cell where congestion occurs from using the P2P service, but only performs limiting on the rate of using the P2P service by the user in the cell where congestion occurs, so that the rate of using the P2P service by the user in the the cell where congestion occurs does not exceed a preset threshold, and therefore, the QoS of the cell having a low congestion level is slightly reduced as compared with the QoS before congestion occurs.

Step 306: The PCRF entity sends a congestion control release policy to the GGSN, so as to release the limiting on the user in the cell where congestion occurs.

Specifically, the PCRF entity may send the congestion control release policy to the GGSN by adopting the method provided in the step 202 of the embodiment shown in FIG. 2, which is not repeated herein.

Step 307: The GGSN restores the QoS.

Specifically, according to the congestion control release policy delivered by the PCRF entity, the GGSN restores the QoS of the user in the cell where congestion occurs to the QoS before congestion occurs, and releases the traffic limiting or service limiting on the user in the cell where congestion occurs.

If congestion occurs in the cell again after the congestion control is released, step 301-step 307 are executed again, so as to initiate a new round of cell congestion control.

In addition, the releasing the limiting on the user in the cell where congestion occurs may also adopt the following manner, in which the step 306 and the step 307 are respectively replaced with:
Step 306': The PCRF entity configures a validity period of the congestion control policy, and delivers the validity period to the GGSN. In this embodiment, the validity period of the congestion control policy may be delivered to the GGSN at the same time when the PCRF entity delivers the congestion control policy, and it is also possible that, after the congestion control policy is delivered, the validity period of the congestion control policy is delivered to the GGSN through a single message. The manner of delivering the validity period of the congestion control policy is not limited in the embodiment of the present invention.
Step 307': The GGSN sets a timer according to the length of the validity period, and after the time of the timer expires, the GGSN restores the QoS of the user in the cell where congestion occurs to the QoS before congestion occurs, and releases the traffic limiting or service limiting on the user in the cell where congestion occurs.

By adopting the method provided in step 306' and step 307', the GGSN can timely release the limiting on the user in the cell where congestion occurs, and can reduce the uncertainty brought by the delivering of the policy, for example, the loss of the congestion control release policy may result in that the user always cannot user some services.

Definitely, the manners of releasing the limiting on the user in the cell where congestion occurs may also be used in a combined manner, and for details, reference can be made to the description of step 202 in the embodiment shown in FIG. 2, and details are not repeated herein.

The control effect generated through a successful congestion control procedure is shown in FIG. 4, and FIG. 4 is a schematic diagram of the congestion control effect of an embodiment of the present invention. Referring to FIG. 4, after the PCRF entity initiates the congestion control, the traffic of the cell is reduced and tends to be stable. After the congestion control is released, if the traffic of the cell exceeds a congestion threshold again, the PCRF entity will initiate the flow of congestion control again, and the users in the two control are both the users in the cell where congestion occurs.

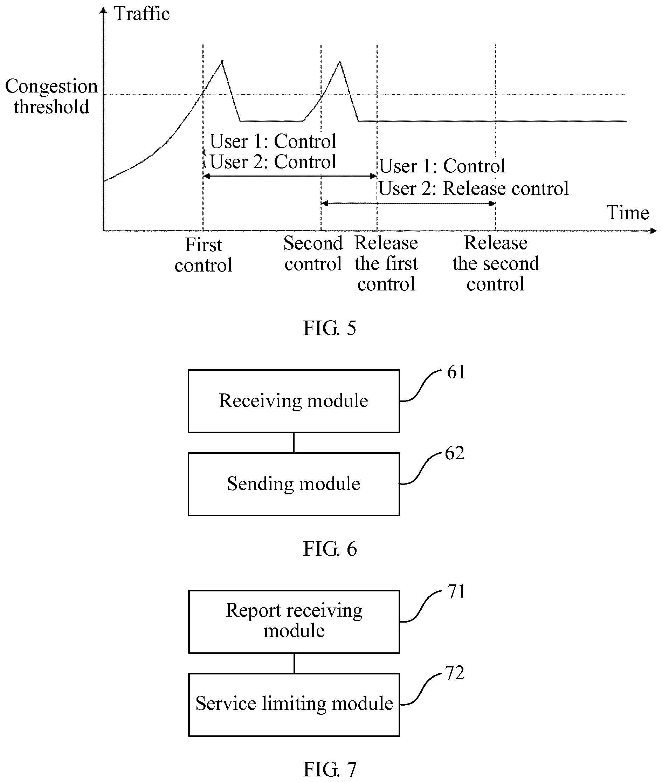

It is assumed that after the PCRF entity initiates the congestion control, congestion occurs in the cell again due to a new user who accesses the cell, and then the PCRF entity initiates the flow of the congestion control directing to the second congestion, sets a timer for the user in the cell where the second congestion occurs, and the user roaming out of the cell after the first congestion restores an original service capability after the timer expires. FIG. 5 is a schematic diagram of congestion control in an embodiment of the present invention, when a user in a cell changes. Referring to FIG. 5, the cell has a user 1 and a user 2, the user 2 performs P2P downloading, which causes cell congestion. After the PCRF entity initiates the congestion control, the user 1 and the user 2 are both limited from using the P2P service, the congestion status of the cell is relieved and restored to a normal state. Afterward, the user 2 roams out of the cell, a user 3 enters the cell, and at this time, because the user 3 performs P2P downloading, congestion of the cell is caused once again. The PCRF entity initiates the congestion control again, the user 1 and the user 3 are both limited from using the P2P service, and at this time, because the user 2 has roamed out of the cell, the user 2 is not affected by the congestion control initiated by the PCRF entity again, and after the timer set when the PCRF entity performs the first congestion control expires, the user 2 restores the capability of using the P2P service.

In the embodiment of the present invention, the PCRF entity performs congestion control on the cell, and does not add extra devices, such as a Probe, thereby saving costs. The OMC is used to receive the congestion status report of the base station, and the congestion control on the base station can be implemented by only adding a reporting interface between the OMC and the PCRF entity. Moreover, the congestion status report reported by the base station includes the user identity, the core network does not need to initiate a function of reporting a user location, thereby reducing the impact on network performance. With the embodiment of the present invention, real-time congestion control on the base station may further be supported, traffic limiting or service limiting on the user in the cell where congestion occurs can be performed in real time, and the service capability of the user can be restored by adopting multiple manners, so the PCRF entity does not need to monitor the mobile status of the user in real time.

Persons of ordinary skill in the art should understand that all or part of the steps in the method embodiments may be implemented by a program instructing relevant hardware. The program may be stored in a computer readable storage medium. When the program runs, the steps in the method embodiments are executed. The storage medium may be any medium capable of storing program codes, such as ROM, RAM, magnetic disk, or CD-ROM.

FIG. 6 is a schematic structural diagram of an embodiment of an operations maintenance center device of the present invention, and the operations maintenance center device in this embodiment can implement the flow chart of the embodiment of the present invention shown in FIG. 1. Referring to FIG. 6, the operations maintenance center device may include: a receiving module 61 and a sending module 62.

The receiving module 61 is adapted to receive a congestion status report of a base station, where the congestion status report includes a cell identity, a congestion status of a cell corresponding to the cell identity, and a user identity in the cell.

In this embodiment, the congestion status report may include cell identities of multiple cells, and each cell may have one or more user identities. The cell identity and user identity in the congestion status report may be carried in the congestion status report in the form of a list or an array; definitely, the embodiment of the present invention is not limited thereto, and the manner of carrying the cell identity and user identity in the congestion status report is not limited in the embodiment of the present invention. The cell identity may be a Server Area Identity or Cell Global Identity; the user identity may be an IMSI; and definitely, the embodiment of the present invention is not limited thereto, the cell identity and user identity may also be other identities, as long as cell identities can identify different cells, and user identities can identify different users.

The congestion status may be congestion or no congestion, represented by "0" or "1", for example, "0" represents no congestion, and "1" represents congestion; alternatively, the congestion status may be congestion or no congestion, a congestion degree is distinguished by more than one congestion level, and a congestion level may be represented by a numeral, for example, "0" represents no congestion, "1" represents level 1 congestion, "2" represents level 2 congestion, and a larger numeral which represents a larger congestion level shows that the congestion status of a cell is severer; definitely, the embodiment of the present invention is not limited thereto, congestion or no congestion may also be represented in other manners, as long as whether congestion occurs can be determined; and congestion levels may also be distinguished in other manners, for example, with English letters or other characters, as long as the congestion levels can be distinguished. Specifically, the receiving module 61 may receive the congestion status report reported by the base station; or, the receiving module 61 may receive the congestion status report reported by the base station through a base station controller.

The sending module 62 is adapted to send the congestion status report received by the receiving module 61 to a policy charging and control rule function entity, so that the policy charging and control rule function entity performs congestion control according to the congestion status report. In this embodiment, a reporting interface is added between an OMC and the policy charging and control rule function entity, the sending module 62 may send the congestion status report to the policy charging and control rule function entity through the reporting interface, so that the policy charging and control rule function entity performs congestion control according to the congestion status report.

The operations maintenance center device provided in the embodiment implements congestion control on the cell in real time, and extra devices are not needed, thereby saving costs. Further, a core network does not need to initiate a function of reporting a user location, and therefore, the impact on network performance is reduced.

FIG. 7 is a schematic structural diagram of an embodiment of a policy charging and control rule function entity of the present invention, and the policy charging and control rule function entity in this embodiment can implement the flow of the embodiment of the present invention shown in FIG. 2. Referring to FIG. 7, the policy charging and control rule function entity may include: a report receiving module 71 and a service limiting module 72.

The report receiving module 71 is adapted to receive a congestion status report sent by an operations maintenance center device, the congestion status report includes a cell identity, a congestion status of a cell corresponding to the cell identity, and a user identity in the cell. In this embodiment, a reporting interface is added between an OMC and the policy charging and the control rule function entity, and the report receiving module 71 receives, through the reporting interface, the congestion status report reported by the operations maintenance center device.

The congestion status report may include cell identities of multiple cells, and each cell may have one or more user identities. The cell identity and user identity in the congestion status report may be carried in the congestion status report in the form of a list or an array; definitely, the embodiment of the present invention is not limited thereto, and the manner of carrying the cell identity and user identity in the congestion status report is not limited in the embodiment of the present invention. In this embodiment, the cell identity may be a Server Area Identity or Cell Global Identity; the user identity may be an IMSI; and definitely, the embodiment of the present invention is not limited thereto, the cell identity and user identity may also be other identities, as long as cell identities can identify different cells, and user identities can identify different users.

The congestion status may be congestion or no congestion, represented by "0" or "1", for example, "0" represents no congestion, and "1" represents congestion; alternatively, the congestion status may be congestion or no congestion, a congestion degree is distinguished by more than one congestion level, and a congestion level may be represented by a numeral, for example, "0" represents no congestion, "1" represents level 1 congestion, "2" represents level 2 congestion, and a larger numeral which represents a larger congestion level shows that the congestion status of a cell is severer; definitely, the embodiment of the present invention is not limited thereto, congestion or no congestion may also be represented in other manners, as long as whether congestion occurs can be determined; and congestion levels may also be distinguished in other manners, for example, with English letters or other characters, as long as the congestion levels can be distinguished.

The service limiting module 72 is adapted to, according to a congestion status in the congestion status report received by the report receiving module 71, when congestion occurs in a cell, perform limiting on a user in the cell where congestion occurs.

The performing, by the service limiting module 72, limiting on the user in the cell where congestion occurs includes performing traffic limiting or service limiting on the user in the cell where congestion occurs.

Specifically, the service limiting module 72 may deliver a congestion control policy to a core network device, so that the core network device may reduce quality of service of a user in the cell where congestion occurs according to the congestion control policy. In this embodiment, the service limiting module 72 may deliver a different congestion control policy according to the congestion level of the cell where congestion occurs. If the congestion level of the cell is high, it indicates that the congestion occurring in the cell is severe, and then the service limiting module 72 may deliver a congestion control policy with a high control degree, so that the quality of service of the cell having a high congestion level is greatly reduced as compared with the quality of service before congestion occurs. If the congestion level of the cell is low, it indicates that the congestion occurring in the cell is light, and then the service limiting module 72 may deliver a congestion control policy with a low control degree, so that the quality of service of the cell having a low congestion level is slightly reduced as compared with the quality of service before congestion occurs.

The policy charging and control rule function entity provided in the embodiment implements, in real time, limiting on the user in the cell where congestion occurs, and extra devices are not needed, thereby saving costs. Further, a core network does not need to initiate a function of reporting a user location, and therefore, the impact on network performance is reduced.

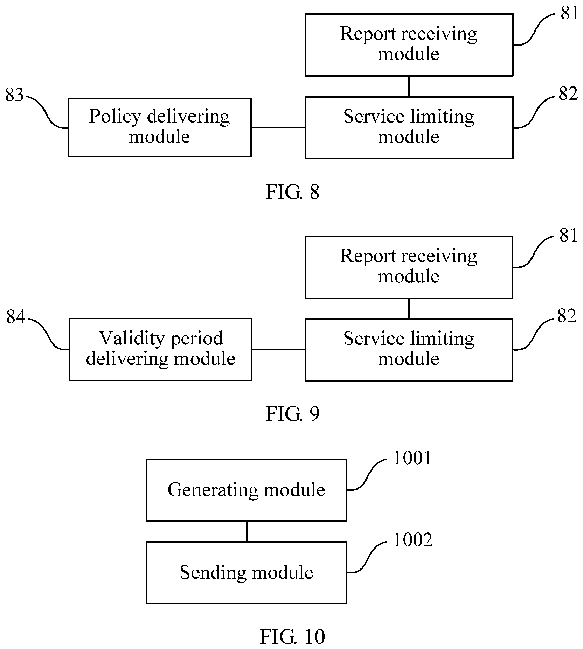

FIG. 8 is a schematic structural diagram of another embodiment of a policy charging and control rule function entity of the present invention, and the policy charging and control rule function entity in this embodiment can implement the flow of the embodiment of the present invention shown in FIG. 2. Referring to FIG. 8, the policy charging and control rule function entity may include: a report receiving module 81, a service limiting module 82, and a policy delivering module 83.

The report receiving module 81 is adapted to receive a congestion status report sent by an operations maintenance center device, the congestion status report includes a cell identity, a congestion status of a cell corresponding to the cell identity, and a user identity in the cell. In this embodiment, a reporting interface is added between an OMC and the policy charging and the control rule function entity, and the report receiving module 81 receives, through the reporting interface, the congestion status report reported by the operations maintenance center device.

The congestion status report may include cell identities of multiple cells, and each cell may have one or more user identities. The cell identity and user identity in the congestion status report may be carried in the congestion status report in the form of a list or an array; definitely, the embodiment of the present invention is not limited thereto, and the manner of carrying the cell identity and user identity in the congestion status report is not limited in the embodiment of the present invention. In this embodiment, the cell identity may be a Server Area Identity or Cell Global Identity; the user identity may be an IMSI; definitely, the embodiment of the present invention is not limited thereto, the cell identity and user identity may also be other identities, as long as cell identities can identify different cells, and user identities can identify different users.

The congestion status may be congestion or no congestion, represented by "0" or "1", for example, "0" represents no congestion, and "1" represents congestion; alternatively, the congestion status may be congestion or no congestion, a congestion degree is distinguished by more than one congestion level, and a congestion level may be represented by a numeral, for example, "0" represents no congestion, "1" represents level 1 congestion, "2" represents level 2 congestion, and a larger numeral which represents a larger congestion level shows that the congestion status of a cell is severer; definitely, the embodiment of the present invention is not limited thereto, congestion or no congestion may also be represented in other manners, as long as whether congestion occurs can be determined; and congestion levels may also be distinguished in other manners, for example, with English letters or other characters, as long as the congestion levels can be distinguished.

The service limiting module 82 is adapted to, according to a congestion status in the congestion status report received by the report receiving module 81, when congestion occurs in a cell, perform limiting on a user in the cell where congestion occurs.

The performing, by the service limiting module 82, limiting on the user in the cell where congestion occurs includes performing traffic limiting or service limiting on the user in the cell where congestion occurs.

Specifically, the service limiting module 82 may deliver a congestion control policy to a core network device, so that the core network device may adjust quality of service of a user in the cell where congestion occurs according to the congestion control policy. In this embodiment, the service limiting module 82 may deliver a different congestion control policy according to the congestion level of the cell where congestion occurs. If the congestion level of the cell is high, it indicates that the congestion occurring in the cell is severe, and then the service limiting module 82 may deliver a congestion control policy with a high control degree, so that the quality of service of the cell having a high congestion level is greatly reduced as compared with the quality of service before congestion occurs. If the congestion level of the cell is low, it indicates that the congestion occurring in the cell is light, and then the service limiting module 82 may deliver a congestion control policy with a low control degree, so that the quality of service of the cell having a low congestion level is slightly reduced as compared with the quality of service before congestion occurs.

In this embodiment, the policy delivering module 83 is adapted to deliver a congestion control release policy to the core network device, so that according to the congestion control release policy, the core network device restores the quality of service of the user in the cell where congestion occurs to the quality of service before congestion occurs. During specific implementation, the policy delivering module 83 may deliver the congestion control release policy to the core network device at a predetermined time or several predetermined times, after a predetermined time length after the service limiting module 82 delivers the congestion control policy, or periodically; or, the policy delivering module 83 may, according to the congestion status in the congestion status report received by the report receiving module 81, after the congestion status of the cell where congestion occurs is released, deliver the congestion control release policy to the core network device.

The policy delivering module 83 delivers a congestion control release policy to the core network device at a predetermined time or several predetermined times, after a predetermined time length after the service limiting module 82 delivers the congestion control policy, or periodically, so that the policy charging and control rule function entity does not need to save location information of the user, does not need to monitor a user location in real time, and even if the user leaves the cell where congestion occurs, the limiting on the user can be released automatically. By using the foregoing manner of releasing the congestion control, when a predetermined time, a predetermined time length or period does not expire, even if the policy delivering module 83 determines, according to the congestion status in the congestion status report sent by the operations maintenance center device, that the congestion state of the cell where congestion occurs is released, the policy delivering module 83 will still not deliver the congestion control release policy to release the limiting on the user in the cell where congestion occurs, thereby effectively prolonging the frequency of a cycle of cell congestion→ service control→ congestion release→ service restoring→ congestion again.

FIG. 9 is a schematic structural diagram of still another embodiment of a policy charging and control rule function entity of the present invention, and the policy charging and control rule function entity in this embodiment can implement the flow of the embodiment of the present invention shown in FIG. 2. Compared with the policy charging and control rule function entity shown in FIG. 8, the difference lies in that, the policy charging and control rule function entity shown in FIG. 9 does not include the policy delivering module 83, and may include:
a validity period delivering module 84, adapted to configure a validity period of the congestion control policy, and deliver the validity period to a core network device, so that after the validity period expires, the core network device restores the quality of service of the user in the cell where congestion occurs to the quality of service before congestion occurs; therefore, the core network device can timely release the limiting on the user in the cell where congestion occurs, and can reduce the uncertainty brought by delivering of the policy, for example, the loss of the congestion control release policy results in that the user always cannot use some services. In this embodiment, the validity period delivering module 84 may deliver the validity period of the congestion control policy to the core network device at the same time when the service limiting module 82 delivers the congestion control policy, and it is also possible that after the service limiting module 82 delivers the congestion control policy, the validity period delivering module 84 delivers the validity period of the congestion control policy to the core network device through a single message. The manner of delivering the validity period of the congestion control policy is not limited in the embodiment of the present invention.

In the embodiment of the present invention, the core network device may be a GGSN.

The policy charging and control rule function entity provided in the foregoing embodiment implements, in real time, limiting on the user in the cell where congestion occurs, and releases the limiting on the user in the cell where congestion occurs, and extra devices are not needed, thereby saving costs. Further, a core network does not need to initiate a function of reporting a user location, and therefore, the impact on network performance is reduced.

FIG. 10 is a schematic structural diagram of an example of a base station of the present invention, as shown in FIG. 10, the base station may include: a generating module 1001 and a sending module 1002.

The generating module 1001 is adapted to generate a congestion status report, where the congestion status report includes a cell identity, a congestion status of a cell corresponding to the cell identity, and a user identity in the cell. The congestion status report may include cell identities of multiple cells, and each cell may have one or more user identities. The cell identity and user identity in the congestion status report may be carried in the congestion status report in the form of a list or an array, and definitely, the example of the present invention is not limited thereto, and the manner of carrying the cell identity and user identity in the congestion status report is not limited in the example of the present invention.

In this example, the cell identity may be a Server Area Identity or Cell Global Identity; the user identity may be an IMSI; definitely, the example of the present invention is not limited thereto, the cell identity and user identity may also be other identities, as long as cell identities can identify different cells, and user identities can identify different users.

The congestion status may be congestion or no congestion, represented by "0" or "1", for example, "0" represents no congestion, and "1" represents congestion; alternatively, the congestion status may be congestion or no congestion, a congestion degree is distinguished by a congestion level, and a congestion level may be represented by a numeral, for example, "0" represents no congestion, "1" represents level 1 congestion, "2" represents level 2 congestion, and a larger numeral which represents a larger congestion level shows that the congestion status of a cell is severer; definitely, the example of the present invention is not limited thereto, congestion or no congestion may also be represented in other manners, as long as whether congestion occurs can be determined; and congestion levels may also be distinguished in other manners, for example, with English letters or other characters, as long as the congestion levels can be distinguished. The sending module 1002 is adapted to send the congestion status report generated by the generating module 1001 to the operations maintenance center device; specifically, the sending module 1002 may send the congestion status report periodically, for example, 10 seconds as a period, the congestion status report is sent every 10 seconds; the sending module 1002 may also send the congestion status report when a congestion status of the cell in the base station changes, for example, when congestion occurs in a cell, it sends the congestion status report; or, when the congestion status of the cell where congestion occurs is released, it sends the congestion status report.

In this example, the sending module 1002 may directly send the congestion status report to the operations maintenance center device, and may also send the congestion status report to the operations maintenance center device through a base station controller, for example, an RNC. The base station implements sending of the congestion status report of the cell in the base station to the operations maintenance center device, so that the operations maintenance center device can send the the congestion status report to the policy charging and control rule function entity. In this way, the policy charging and control rule function entity performs congestion control according to the congestion status report, thereby implementing congestion control on a cell in real time without the need of adding extra devices, and saving costs. Further, a core network does not need to initiate a function of reporting a user location, and therefore, the impact on network performance is reduced.

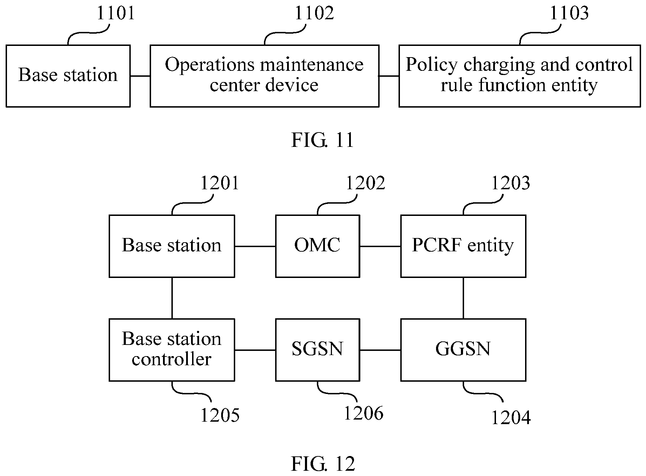

FIG. 11 is a schematic structural diagram of an embodiment of a congestion control system of the present invention, the congestion control system in this embodiment can implement the flow of the embodiment of the present invention shown in FIG. 3. Referring to FIG. 11, the congestion control system may include: a base station 1101, an operations maintenance center device 1102, and a policy charging and control rule function entity 1103.

The base station 1101 is adapted to generate a congestion status report, and send the generated congestion status report to the operations maintenance center device 1102; the congestion status report includes a cell identity, a congestion level, and a user identity in the cell where congestion occurs; and specifically, the base station 1101 may be implemented by the base station in the embodiment of the present invention shown in FIG. 10.

The operations maintenance center device 1102 is adapted to receive the congestion status report of the base station 1101, and sends the congestion status report to the policy charging and control rule function entity 1103. Specifically, the operations maintenance center device 1102 may be implemented by the operations maintenance center device in the embodiment of the present invention shown in FIG. 6.

The policy charging and control rule function entity 1103 is adapted to receive the congestion status report sent by the operations maintenance center device 1102, and according to the congestion status report, when congestion occurs in a cell, perform limiting on a user in the cell where congestion occurs. Specifically, the policy charging and control rule function entity 1103 may be implemented by the policy charging and control rule function entity in the embodiment of the present invention shown in FIG. 7, FIG. 8 or FIG. 9.

The congestion control system implements congestion control on a cell in real time, and extra devices are not needed, thereby saving costs. Further, a core network does not need to initiate a function of reporting a user location, and therefore, the impact on network performance is reduced. FIG. 12 is a schematic structural diagram of another embodiment of a congestion control system of the present invention, the congestion control system in this embodiment can implement the flow of the embodiment of the present invention shown in FIG. 3, and in this embodiment, a core network device being a GGSN is taken as an example for illustration.

Referring to FIG. 12, the congestion control system may include: a base station 1201, an OMC 1202, a PCRF entity 1203, a GGSN 1204, and a base station controller 1205.

The base station 1201 is adapted to generate a congestion status report, and send the generated congestion status report to the OMC 1202, where the congestion status report includes a cell identity, a congestion level, and a user identity in a cell where congestion occurs. Specifically, the base station 1101 may be implemented by the base station of the embodiment of the present invention shown in FIG. 10. Optionally, in some networks, the congestion status report of the base station 1201 may be reported by a base station controller 1205 serving as a proxy, and the the base station controller 1205 may be a base station controller (Base Station Controller; referred to as BSC herein below) or an RNC.

The OMC 1202 is adapted to receive the congestion status report of the base station 1201, and send the congestion status report to the PCRF entity. Specifically, the OMC 1202 may be implemented by the operations maintenance center device of the embodiment of the present invention shown in FIG. 6.

The PCRF entity 1203 is adapted to receive the congestion status report sent by the OMC 1202, and according to the congestion status report, when congestion occurs in a cell, perform limiting on a user in the cell where congestion occurs. Specifically, the PCRF entity 1203 may deliver a congestion control policy to the GGSN 1204, and the GGSN 1204 is adapted to, according to the congestion control policy, adjust QoS of the user in the cell where congestion occurs. The PCRF entity 1203 may be implemented by the policy charging and control rule function entity of the embodiment of the present invention shown in FIG. 7, FIG. 8 or FIG. 9.

During specific implementation, the congestion control system may further include an SGSN 1206, which is adapted to perform operations, such as routing and forwarding of packet data packages, encryption and authentication, session management, mobility management, logic link management, bill generation and output.

The congestion control system implements, in real time, limiting on the user in the cell where congestion occurs, and extra devices are not needed, thereby saving costs. Further, a core network does not need to initiate a function of reporting a user location, and therefore, the impact on network performance is reduced.

It should be understood by persons skilled in the art that the accompanying drawings are merely schematic diagrams of an exemplary embodiment, and modules or processes in the accompanying drawings are not necessarily required in implementing the present invention.

Those skilled in the art may understand that the modules in the devices provided in the embodiments may be distributed in the devices according to the description of the embodiments, or may be arranged in one or multiple devices which are different from those described in the embodiments after corresponding changes. The modules according to the above embodiments may be combined into one module, or split into multiple sub-modules.

Finally, it should be noted that the embodiments described above are intended for describing the technical solutions of the present invention, but not intended to limit the present invention. Although the present invention is described in detail with reference to the foregoing embodiments, persons of ordinary skill in the art should understand that modifications can still be made to the technical solutions described in each of the foregoing embodiments or substitutions can be made to some technical features thereof, as long as such modifications or substitutions do not cause the essence of the corresponding technical solutions to depart from the scope of the technical solutions of each of the embodiments of the present invention as defined by the appended claims.

## Claims

1. A congestion control method, comprising:
receiving (101), by an operations maintenance center (1202), a congestion status report of a base station (1201);
sending (102), by the operations maintenance center (1202), the congestion status report to a policy charging and control rule function entity (1203) through a reporting interface, and the policy charging and control rule function entity (1203) performs congestion control according to the congestion status report,
wherein, the performing, by the policy charging and control rule function entity (1203), the congestion control according to the congestion status report comprises:
when congestion occurs in a cell, according to a congestion status in the congestion status report, performing, by the policy charging and control rule function entity (1203), limiting on a user in the cell where congestion occurs,
wherein the performing limiting on the user in the cell where congestion occurs includes performing traffic limiting or service limiting on the user in the cell where congestion occurs.

2. The method according to claim 1, wherein the congestion status report comprises a cell identity, a congestion status of a cell corresponding to the cell identity, and a user identity in the cell.

3. The method according to claim 2, wherein, the receiving, by the operations maintenance center (1202), the congestion status report of the base station (1201) comprises:
receiving, by the operations maintenance center (1202), the congestion status report reported by the base station (1201); or,
receiving, by the operations maintenance center (1202), the congestion status report reported by the base station (1201) through a base station controller (1205).

4. The method according to claim 1, wherein, the performing the limiting on the user in the cell where congestion occurs comprises:
delivering, by the policy charging and control rule function entity (1203), a congestion control policy to a core network device (1204), wherein the core network device (1204) reduces, according to the congestion control policy, quality of service of the user in the cell where congestion occurs.

5. The method according to claim 4, wherein, after the performing the limiting on the user in the cell where congestion occurs, the method further comprises:
configuring, by the policy charging and control rule function entity (1203), a validity period of the congestion control policy, delivering the validity period to the core network device (1204), wherein, after the validity period expires, the core network device (1204) restores the quality of service of the user in the cell where congestion occurs to quality of service before congestion occurs.

6. The method according to claim 4, wherein, after the performing the limiting on the user in the cell where congestion occurs, the method further comprises:
delivering, by the policy charging and control rule function entity (1203), a congestion control release policy to the core network device (1204), wherein the core network device (1204) restores, according to the congestion control release policy, the quality of service of the user in the cell where congestion occurs to quality of service before congestion occurs;
the delivering, by the policy charging and control rule function entity (1203), the congestion control release policy to the core network device (1204) comprises:
delivering, by the policy charging and control rule function entity (1203), the congestion control release policy to the core network device (1204) at a predetermined - time or several predetermined times, after a predetermined time length after delivering the congestion control policy, or periodically; or,
according to the congestion status in the congestion status report sent by the operations maintenance center (1202), after a congestion status of the cell where congestion occurs is released, delivering, by the policy charging and control rule function entity (1203), the congestion control release policy to the core network device (1204).

7. An operations maintenance center (1202), comprising:
a receiving module (61), adapted to receive a congestion status report of a base station (1201); and
a sending module (62), adapted to send the congestion status report received by the receiving module (61) to a policy charging and control rule function entity (1203) through a reporting interface, and the policy charging and control rule function entity (1203) performs congestion control according to the congestion status report,
wherein, the performing, by the policy charging and control rule function entity (1203), the congestion control according to the congestion status report comprises:
when congestion occurs in a cell, according to a congestion status in the congestion status report, performing, by the policy charging and control rule function entity (1203), limiting on a user in the cell where congestion occurs,
wherein the performing limiting on the user in the cell where congestion occurs includes performing traffic limiting or service limiting on the user in the cell where congestion occurs.

8. The operations maintenance center (1202) according to claim 7, wherein, the receiving module (61) is specifically adapted to receive the congestion status report reported by the base station (1201); or, the receiving module (61) is specifically adapted to receive the congestion status report reported by the base station (1201) through a base station controller (1205).

9. A policy charging and control rule function entity (1203), comprising:
a report receiving module (71), adapted to receive through a reporting interface a congestion status report of a base station (1201) sent by an operations maintenance center (1202); and
a service limiting module (72), adapted to, according to a congestion status in the congestion status report received by the report receiving module (71), when congestion occurs in a cell, perform limiting on a user in the cell where congestion occurs, wherein the performing limiting on the user in the cell where congestion occurs includes performing traffic limiting or service limiting on the user in the cell where congestion occurs.

10. The policy charging and control rule function entity (1203) according to claim 9, wherein, the service limiting module (72) is specifically adapted to deliver a congestion control policy to a core network device (1204), wherein the core network device (1204) reduces, according to the congestion control policy, quality of service of the user in the cell where congestion occurs.

11. The policy charging and control rule function entity (1203) according to claim 10, further comprising: a validity period delivering module (84), adapted to configure a validity period of the congestion control policy, and deliver the validity period to the core network device (1204), wherein, after the validity period expires the core network device (1204) restores the quality of service of the user in the cell where congestion occurs to quality of service before congestion occurs.

12. The policy charging and control rule function entity (1203) according to claim 10, further comprising:
a policy delivering module (83), adapted to deliver a congestion control release policy to the core network device (1204), wherein the core network device (1204) restores, according to the congestion control release policy, the quality of service of the user in the cell where congestion occurs to quality of service before congestion occurs;
the policy delivering module (83) is specifically adapted to deliver the congestion control release policy to the core network device (1204) at a predetermined time or several predetermined times, after a predetermined time length after the service limiting module (72) delivers the congestion control policy, or periodically; or, the policy delivering module (83) is specifically adapted to, according to the congestion status in the congestion status report received by the report receiving module (71), after a congestion status of the cell where congestion occurs is released, deliver the congestion control release policy to the core network device (1204).

## Patentansprüche

1. Überlastungssteuerverfahren, das Folgendes umfasst:
Empfangen (101) eines Überlastungsstatusberichts einer Basisstation (1201) durch ein Betriebswartungszentrum (1202);
Senden (102) des Überlastungsstatusberichts durch das Betriebswartungszentrum (1202) über eine Berichtsschnittstelle an eine "Policy Charging and Control Rule Function"-Entität (1203), und
die "Policy Charging and Control Rule Function"-Entität (1203) führt eine Überlastungssteuerung gemäß dem Überlastungsstatusbericht durch,
wobei das Durchführen der Überlastungssteuerung gemäß dem Überlastungsstatusbericht durch die "Policy Charging and Control Rule Function"-Entität (1203) Folgendes umfasst:
wenn gemäß einem Überlastungsstatus im Überlastungsstatusbericht eine Überlastung in einer Zelle auftritt, Durchführen einer Begrenzung für einen Benutzer in der Zelle, in der die Überlastung auftritt, durch die "Policy Charging and Control Rule Function"-Entität (1203),
wobei das Durchführen einer Begrenzung für einen Benutzer in der Zelle, in der die Überlastung auftritt, das Durchführen einer Verkehrsbegrenzung oder Dienstbegrenzung für den Benutzer in der Zelle, in der die Überlastung auftritt, beinhaltet.

2. Verfahren nach Anspruch 1, wobei der Überlastungsstatusbericht eine Zellidentität, einen Überlastungsstatus einer Zelle, die der Zellidentität entspricht, und eine Benutzeridentität in der Zelle umfasst.

3. Verfahren nach Anspruch 2, wobei das Empfangen des Überlastungsstatusberichts der Basisstation (1201) durch das Betriebswartungszentrum (1202) Folgendes umfasst:
Empfangen des von der Basisstation (1201) übermittelten Überlastungsstatusberichts durch das Betriebswartungszentrum (1202) oder
Empfangen des von der Basisstation (1201) übermittelten Überlastungsstatusberichts durch das Betriebswartungszentrum (1202) über eine Basisstationssteuerung (1205).

4. Verfahren nach Anspruch 1, wobei das Durchführen der Begrenzung für den Benutzer in der Zelle, in der die Überlastung auftritt, Folgendes umfasst:
Liefern einer Überlastungssteuerungsrichtlinie durch die "Policy Charging and Control Rule Function"-Entität (1203) an eine Kernnetzwerkvorrichtung (1204), wobei die Kernnetzwerkvorrichtung (1204) gemäß der Überlastungssteuerungsrichtlinie eine Dienstgüte des Benutzers in der Zelle, in der eine Überlastung auftritt, reduziert.

5. Verfahren nach Anspruch 4, wobei nach dem Durchführen der Begrenzung für den Benutzer in der Zelle, in der eine Überlastung auftritt, das Verfahren ferner Folgendes umfasst:
Auslegen einer Validitätsperiode der Überlastungssteuerungsrichtlinie durch die "Policy Charging and Control Rule Function"-Entität (1203), Liefern der Validitätsperiode an die Kernnetzwerkvorrichtung (1204), wobei die Kernnetzwerkvorrichtung (1204) nach Ablauf der Validitätsperiode die Dienstgüte des Benutzers in der Zelle, in der eine Überlastung auftritt, in einer Dienstgüte vor Auftreten einer Überlastung wiederherstellt.

6. Verfahren nach Anspruch 4, wobei nach dem Durchführen der Begrenzung für den Benutzer in der Zelle, in der eine Überlastung auftritt, das Verfahren ferner Folgendes umfasst:
Liefern einer Überlastungssteuerungsfreigaberichtlinie durch die "Policy Charging and Control Rule Function"-Entität (1203) an die Kernnetzwerkvorrichtung (1204), wobei die Kernnetzwerkvorrichtung (1204) gemäß der Überlastungssteuerungsfreigaberichtlinie die Dienstgüte des Benutzers in der Zelle, in der eine Überlastung auftritt, in einer Dienstgüte vor Auftreten einer Überlastung wiederherstellt;
wobei das Liefern der Überlastungssteuerungsfreigaberichtlinie durch die "Policy Charging and Control Rule Function"-Entität (1203) an die Kernnetzwerkvorrichtung (1204) Folgendes umfasst:
Liefern der Überlastungssteuerungsfreigaberichtlinie durch die "Policy Charging and Control Rule Function"-Entität (1203) an die Kernnetzwerkvorrichtung (1204) zu einer vorbestimmten Zeit oder mehreren vorbestimmten Zeiten nach einer vorbestimmten Zeitlänge nach Lieferung der Überlastungssteuerungsrichtlinie oder regelmäßig oder
gemäß dem Überlastungsstatus im Überlastungsstatusbericht, der vom Betriebswartungszentrum (1202) gesendet wurde, nachdem ein Überlastungsstatus der Zelle, in der eine Überlastung auftritt, freigegeben wurde, Liefern der Überlastungssteuerungsfreigaberichtlinie durch die "Policy Charging and Control Rule Function"-Entität (1203) an die Kernnetzwerkvorrichtung (1204).

7. Betriebswartungszentrum (1202), das Folgendes umfasst:
ein Empfangsmodul (61), das angepasst ist, einen Überlastungsstatusbericht einer Basisstation (1201) zu empfangen; und
ein Sendemodul (62), das angepasst ist, den Überlastungsstatusbericht, der vom Empfangsmodul (61) empfangen wurde, über eine Berichtsschnittstelle an eine "Policy Charging and Control Rule Function"-Entität (1203) zu senden, und
die "Policy Charging and Control Rule Function"-Entität (1203) führt eine Überlastungssteuerung gemäß dem Überlastungsstatusbericht durch,
wobei das Durchführen der Überlastungssteuerung gemäß dem Überlastungsstatusbericht durch die "Policy Charging and Control Rule Function"-Entität (1203) Folgendes umfasst:
wenn gemäß einem Überlastungsstatus im Überlastungsstatusbericht eine Überlastung in einer Zelle auftritt, Durchführen einer Begrenzung für einen Benutzer in der Zelle, in der die Überlastung auftritt, durch die "Policy Charging and Control Rule Function"-Entität (1203),
wobei das Durchführen einer Begrenzung für einen Benutzer in der Zelle, in der die Überlastung auftritt, das Durchführen einer Verkehrsbegrenzung oder Dienstbegrenzung für den Benutzer in der Zelle, in der die Überlastung auftritt, beinhaltet.

8. Betriebswartungszentrum (1202) nach Anspruch 7, wobei das Empfangsmodul (61) speziell angepasst ist, den Überlastungsstatusbericht, der von der Basisstation (1201) übermittelt wurde, zu empfangen; oder das Empfangsmodul (61) speziell angepasst ist, den Überlastungsstatusbericht, der von der Basisstation (1201) übermittelt wurde, über eine Basisstationssteuerung (1205) zu empfangen.

9. "Policy Charging and Control Rule Function"-Entität (1203), die Folgendes umfasst:
ein Berichtsempfangsmodul (71), das angepasst ist, über eine Berichtsschnittstelle einen Überlastungsstatusbericht einer Basisstation (1201) zu empfangen, der von einem Betriebswartungszentrum (1202) gesendet wurde; und
ein Dienstbegrenzungsmodul (72), das angepasst ist, gemäß einem Überlastungsstatus im Überlastungsstatusbericht, der vom Berichtsempfangsmodul (71) empfangen wurde, wenn eine Überlastung in einer Zelle auftritt, eine Begrenzung für einen Benutzer in der Zelle durchzuführen, in der eine Überlastung auftritt, wobei das Durchführen einer Begrenzung für einen Benutzer in der Zelle, in der eine Überlastung auftritt, das Durchführen einer Verkehrsbegrenzung oder Dienstbegrenzung für den Benutzer in der Zelle, in der eine Überlastung auftritt, beinhaltet.

10. "Policy Charging and Control Rule Function"-Entität (1203) nach Anspruch 9, wobei das Dienstbegrenzungsmodul (72) speziell angepasst ist, eine Überlastungssteuerungsrichtlinie an eine Kernnetzwerkvorrichtung (1204) zu liefern, wobei die Kernnetzwerkvorrichtung (1204) gemäß der Überlastungssteuerungsrichtlinie eine Dienstgüte des Benutzers in der Zelle, in der eine Überlastung auftritt, reduziert.

11. "Policy Charging and Control Rule Function"-Entität (1203) nach Anspruch 10, die ferner Folgendes umfasst:
ein Validitätsperiodenliefermodul (84), das angepasst ist, eine Validitätsperiode der Überlastungssteuerungsrichtlinie auszulegen und die Validitätsperiode an die Kernnetzwerkvorrichtung (1204) zu liefern, wobei die Kernnetzwerkvorrichtung (1204) nach Ablauf der Validitätsperiode die Dienstgüte des Benutzers in der Zelle, in der eine Überlastung auftritt, in einer Dienstgüte vor Auftreten einer Überlastung wiederherstellt.

12. "Policy Charging and Control Rule Function"-Entität (1203) nach Anspruch 10, die ferner Folgendes umfasst:
ein Richtlinienliefermodul (83), das angepasst ist, eine Überlastungssteuerungsfreigaberichtlinie an die Kernnetzwerkvorrichtung (1204) zu liefern, wobei
die Kernnetzwerkvorrichtung (1204) gemäß der Überlastungssteuerungsfreigaberichtlinie die Dienstgüte des Benutzers in der Zelle, in der eine Überlastung auftritt, in einer Dienstgüte vor Auftreten einer Überlastung wiederherstellt;
das Richtlinienliefermodul (83) speziell angepasst ist, die Überlastungssteuerungsfreigaberichtlinie zu einer vorbestimmten Zeit oder mehreren vorbestimmten Zeiten nach einer vorbestimmten Zeitlänge nachdem das Dienstbegrenzungsmodul (72) die Überlastungssteuerungsrichtlinie geliefert hat, oder regelmäßig an die Kernnetzwerkvorrichtung (1204) zu liefern; oder das Richtlinienliefermodul (83) speziell angepasst ist, gemäß dem Überlastungsstatus im Überlastungsstatusbericht, der vom Berichtsempfangsmodul (71) empfangen wurde, nachdem ein Überlastungsstatus der Zelle, in der eine Überlastung auftritt, freigegeben wurde, die Überlastungssteuerungsfreigaberichtlinie an die Kernnetzwerkvorrichtung (1204) zu liefern.

## Revendications

1. Procédé de régulation de l'encombrement, comprenant :
la réception (101), par un centre d'exploitation et de maintenance (1202), d'un rapport d'état d'encombrement d'une station de base (1201) ;
l'envoi (102), par le centre d'exploitation et de maintenance (1202), du rapport de l'état d'encombrement à une entité fonctionnelle de règles de politique, de facturation et de commande (1203) par l'intermédiaire d'une interface de signalement de rapport, et
l'entité fonctionnelle de règles de politique, de facturation et de commande (1203) effectuant une régulation de l'encombrement en fonction du rapport de l'état d'encombrement,
dans lequel l'exécution, par l'entité fonctionnelle de règles de politique, de facturation et de commande (1203), de la régulation de l'encombrement en fonction du rapport de l'état d'encombrement comprend : lorsqu'un encombrement se produit, en fonction d'un état d'encombrement dans le rapport de l'état d'encombrement, l'exécution, par l'entité fonctionnelle de règles de politique, de facturation et de commande (1203), de la limitation sur un utilisateur dans la cellule où l'encombrement se produit,
dans lequel l'exécution de la limitation sur l'utilisateur dans la cellule où l'encombrement se produit comprend l'exécution de la limitation du trafic ou de la limitation du service sur l'utilisateur dans la cellule où l'encombrement se produit.

2. Procédé selon la revendication 1, dans lequel le rapport de l'état d'encombrement comprend une identité de cellule, un état d'encombrement d'une cellule correspondant à l'identité de la cellule, et une identité de l'utilisateur dans la cellule.

3. Procédé selon la revendication 2, dans lequel la réception, par le centre d'exploitation et de maintenance (1202), du rapport de l'état d'encombrement de la station de base (1201) comprend :
la réception, par le centre d'exploitation et de maintenance (1202), du rapport de l'état d'encombrement signalé par la station de base (1201) ; ou
la réception, par le centre d'exploitation et de maintenance (1202), du rapport de l'état d'encombrement signalé par la station de base (1201) par l'intermédiaire d'un contrôleur de station de base (1205).

4. Procédé selon la revendication 1, dans lequel l'exécution de la limitation sur l'utilisateur dans la cellule où l'encombrement se produit comprend :
la fourniture, par l'entité fonctionnelle de règles de politique, de facturation et de commande (1203), d'une politique de régulation de l'encombrement à un dispositif du réseau central (1204), ce dispositif du réseau central (1204) réduisant, en fonction de de la politique de régulation de l'encombrement, la qualité du service de l'utilisateur dans la cellule où l'encombrement se produit.

5. Procédé selon la revendication 4, ce procédé comprenant en outre, après l'exécution de la limitation sur l'utilisateur dans la cellule où l'encombrement se produit :
la configuration, par l'entité fonctionnelle de règles de politique, de facturation et de commande (1203), d'une période de validité de la politique de régulation de l'encombrement, fournissant cette période de validité au dispositif du réseau central (1204),
le dispositif du réseau central (1204), après que la période de validité a expiré, rétablissant la qualité de service de l'utilisateur dans la cellule où l'encombrement se produit à la qualité de service avant que l'encombrement ne se produise.

6. Procédé selon la revendication 4, ce procédé comprenant en outre, après l'exécution de la limitation sur l'utilisateur dans la cellule où l'encombrement se produit :
la fourniture, par l'entité fonctionnelle de règles de politique, de facturation et de commande (1203), d'une politique d'abandon de la régulation de l'encombrement au dispositif du réseau central (1204), ce dispositif du réseau central (1204) rétablissant, en fonction de de la politique d'abandon de la régulation de l'encombrement, la qualité du service de l'utilisateur dans la cellule où l'encombrement se produit à la qualité du service avant que l'encombrement ne se produise ;
la fourniture, par l'entité fonctionnelle de règles de politique, de facturation et de commande (1203), de la politique d'abandon de la régulation de l'encombrement au dispositif du réseau central (1204) comprenant :
la fourniture, par l'entité fonctionnelle de règles de politique, de facturation et de commande (1203), de la politique d'abandon de la régulation de l'encombrement au dispositif du réseau central (1204) à un moment prédéterminé ou à plusieurs moments prédéterminés, après une longueur de temps prédéterminée après la fourniture de la politique de régulation de l'encombrement, ou périodiquement ; ou,
en fonction de l'état d'encombrement dans le rapport de l'état d'encombrement envoyé par le centre d'exploitation et de maintenance (1202), après qu'un état d'encombrement de la cellule où l'encombrement se produit a été éliminé, la fourniture, par l'entité fonctionnelle de règles de politique, de facturation et de commande (1203), de la politique d'abandon de la régulation de l'encombrement au dispositif du réseau central (1204).

7. Centre d'exploitation et de maintenance (1202) comprenant :
un module de réception (61), adapté de façon à recevoir un rapport d'état d'encombrement d'une station de base (1201) ;
un module d'envoi (62), adapté de façon à envoyer le rapport de l'état d'encombrement reçu par le module de réception (61) à une entité fonctionnelle de règles de politique, de facturation et de commande (1203) par l'intermédiaire d'une interface de signalement de rapport, et
l'entité fonctionnelle de règles de politique, de facturation et de commande (1203) effectuant une régulation de l'encombrement en fonction du rapport de l'état d'encombrement,
l'exécution, par l'entité fonctionnelle de règles de politique, de facturation et de commande (1203), de la régulation de l'encombrement en fonction de du rapport de l'état d'encombrement comprenant :
lorsque l'encombrement se produit, en fonction d'un état d'encombrement dans le rapport de l'état d'encombrement, l'exécution, par l'entité fonctionnelle de règles de politique, de facturation et de commande (1203), de la limitation sur un utilisateur dans la cellule où l'encombrement se produit,
l'exécution de la limitation sur l'utilisateur dans la cellule où l'encombrement se produit comprenant l'exécution de la limitation du trafic ou de la limitation du service sur l'utilisateur dans la cellule où l'encombrement se produit.

8. Centre d'exploitation et de maintenance (1202) selon la revendication 7, dans lequel le module de réception (61) est adapté spécifiquement de façon à recevoir le rapport de l'état d'encombrement signalé par la station de base (1201) ; ou le module de réception (61) est adapté spécifiquement de façon à recevoir le rapport de l'état d'encombrement signalé par la station de base (1201) par l'intermédiaire d'un contrôleur de station de base (1205).

9. Entité fonctionnelle de règles de politique, de facturation et de commande (1203), comprenant :
un module de réception de rapport (71), adapté de façon à recevoir, par l'intermédiaire d'une interface de signalement de rapport, un rapport de l'état d'encombrement d'une station de base (1201) envoyé par un centre d'exploitation et de maintenance (1202) ; et
un module de limitation de service (72), adapté de façon à, en fonction d'un état d'encombrement du rapport de l'état d'encombrement reçu par le module de réception de rapport (71), lorsqu'un encombrement se produit dans une cellule, exécuter la limitation sur un utilisateur dans la cellule où l'encombrement se produit, l'exécution de la limitation sur un utilisateur dans la cellule où l'encombrement se produit comprenant la limitation du trafic ou la limitation du service sur l'utilisateur dans la cellule où l'encombrement se produit.

10. Entité fonctionnelle de règles de politique, de facturation et de commande (1203) selon la revendication 9, dans laquelle le module de limitation du service (72) est adapté spécifiquement de façon à fournir une politique de régulation de l'encombrement à un dispositif du réseau central (1204),
le dispositif du réseau central (1204) réduisant, en fonction de de la politique de régulation de l'encombrement, la qualité du service de l'utilisateur dans la cellule où l'encombrement se produit.

11. Entité fonctionnelle de règles de politique, de facturation et de commande (1203) selon la revendication 10, comprenant en outre :
un module de fourniture de période de validité (84), adapté de façon à configurer une période de validité de la politique de régulation de l'encombrement, et à fournir cette période de validité au dispositif du réseau central (1204), le dispositif du réseau central (1204) rétablissant, après que la période de validité a expiré, la qualité du service de l'utilisateur dans la cellule où l'encombrement se produit à la qualité de service avant que l'encombrement ne se produise.

12. Entité fonctionnelle de règles de politique, de facturation et de commande (1203) selon la revendication 10, comprenant en outre :
un module de fourniture de politique (83), adapté de façon à fournir une politique d'abandon de la régulation de l'encombrement au dispositif du réseau central (1204), le dispositif du réseau central (1204) rétablissant, en fonction de la politique d'abandon de la régulation de l'encombrement, la qualité du service l'utilisateur dans la cellule où l'encombrement se produit à la qualité du service avant que l'encombrement ne se produise ;
ce module de fourniture de politique (83) étant adapté spécifiquement de façon à fournir la politique d'abandon de la régulation de l'encombrement au dispositif du réseau central (1204) à un moment prédéterminé ou à plusieurs moments prédéterminés, après une longueur de temps prédéterminée après que le module de limitation du service (72) a fourni la politique de régulation de l'encombrement, ou périodiquement ; ou bien le module de fourniture de politique (83) étant adapté spécifiquement de façon à, en fonction de l'état d'encombrement dans le rapport de l'état d'encombrement reçu par le module de réception du rapport (71), après qu'un état de congestion de la cellule où l'encombrement se produit a été éliminé, fournir la politique d'abandon de la régulation de l'encombrement au dispositif du réseau central (1204).
